# EUROPEAN PATENT SPECIFICATION

(11) **EP 4 217 793 B1**
(45) Date of publication and mention of the grant of the patent: **05.03.2025**
(21) Application number: 21783476.1
(22) Date of filing: 24.09.2021
(51) Int. Cl.: G02C 5/22

(54) **HINGE MECHANISM FOR SPECTACLES**
BRILLENSCHANIERMECHANISMUS
MÉCHANISME DE CHARNIÈRE POUR LUNETTES

(30) Priority: 28.09.2020 DK PA202070654
(43) Date of publication of application: 02.08.2023
(73) Proprietor: Monoqool ApS, 3480 Fredensborg (DK)
(72) Inventor: HANGHØJ, Mads, 5762 Vester Skerninge (DK)
(74) Representative: Münzer, Marc Eric
(86) International application number: PCT/EP2021/076379
(87) International publication number: WO 2022/063998

(56) References cited:
- EP-A1- 3 435 142
- EP-A1- 3 726 280
- WO-A1-2017/216295
- DE-B3- 102019 002 803
- FR-A- 1 593 112
- KR-A- 20150 125 186
- US-A- 6 116 733

## Description

### FIELD OF THE INVENTION

The present invention relates to hinge mechanism for spectacles without screws and a method for applying the hinge mechanism.

### BACKGROUND OF THE INVENTION

Spectacles usually comprises a frame front and two side bars. The side bars are connected to the frame front by hinges. A hinge usually have a screw connection, connecting the side bar to the frame front. However, it is also known to have screw less connections.

Elastic hinges using split temples for providing the hinge function are known from WO2017/216295 as well as FR1593112, US6116733, DE102019 002803, KR20150125186 and EP3435142.

A disadvantage of spectacles using a hinge connection with a screw is that after long time use of the spectacles, the screw may be loose and may even fall off.

A disadvantage by screw less hinges for spectacles is that the connection between the frame front and the side bar is often unstable and slack, allowing the side bars to wiggle causing discomfort.

Hence, an improved hinge would be advantageous, and in particular a more stable hinge would be advantageous.

### OBJECT OF THE INVENTION

It is an object of the present invention to provide a stable screw less hinge for spectacles providing a stable connection between the frame front and the side bars.

### SUMMARY OF THE INVENTION

The claimed invention is defined in the claims.

Thus, the above described object and several other objects are intended to be obtained in a first aspect of the invention by providing a hinge mechanism for spectacles comprising a frame front and two side bars, the frame front comprises two side sections for attaching the side bars to the frame front, each side section comprises a connection hole and a notch, and each side bar comprises an axial groove, the axial groove divides an upper end of the side bar in an outside elastic part and an inside elastic part, the outside elastic part and the inside elastic part both generates a spring force working towards the axial groove,
- the outside elastic part of the side bar is engaging the connection hole of the side section, and
- the inside elastic part of the side bar is engaging the notch of the side section,
- the spring force of the outside elastic part is pressuring the outside elastic part against the side of the connection hole, and
- the spring force of the inside elastic part is pressuring the inside elastic part against the notch,
- the outside elastic part comprises a connection hook, and the connection hook is engaging the side section, preventing the outside elastic part from sliding out of the connection hole.

The invention is particularly, but not exclusively, advantageous for obtaining a stable connection between the frame front and the side bars. The frame front comprises two u-shaped side sections. The side bars are attached to the u-shaped side sections. The side sections each comprises a connection hole and a notch, and further the side sections comprises an intermediate part between the connection hole and the notch. The outside elastic part is engaging the connection hole at one side of the intermediate part, and the inside elastic part is engaging the notch on the other side of the intermediate part. The spring force occurs because, when the side bar is mounted and attached to the frame front, the outside elastic part and the inside elastic part are bend away from each other by the intermediate part, so the outside elastic part and the inside elastic part both acts like blade springs applying a force towards the axial groove and the intermediate part, and thereby towards each other, so the side bar clings around the intermediate part between the connection hole and the notch.

When the side bar is in an open position, the spring force applied between the outside elastic part and the inside elastic part makes the outside elastic part engaging and pressuring against the side of the connection hole and the inside elastic part engaging and pressuring against the notch, the inside elastic part and the outside elastic part applying a pressure towards each other, fixing the side bar in a preferred and stable position.

Further, the connection hook, at the end of the outside elastic part, when the side bar is in an open position, is engaging against the side section preventing the side bar end especially the outside elastic part of the side bar from sliding out of the connection hole. If the outside elastic part slid out of the connection hole, the side bar would fall away from the frame front and the spectacle fall apart.

The side section comprises an inner side, the side section is basically u-shaped, and the inner side of the u-shape is the inner side of the side section. The inner side of the side section is facing towards the frame front, while the outer side of the side section is facing away from the frame front.

The connection hook is located at the top end of the outside elastic part, and when the outside elastic part is engaging the connection hole, at least part of the connection hook is located at the inner side of the u-shaped side section, and is engaging the side section in such a manner that it is preventing the outside elastic part from sliding out of the connection hole, for instance by the connection hook engaging the inner side of the u-shaped side section. The connection hook may for instance be engaging the inside edge of the connection hole.

According to an embodiment, the inside elastic part comprises a slanting part, and when the side bar is in an open position, the notch is engaging the slanting part. The inside elastic part comprises a straight part, a slanting part and a locking hook. When the side bar is in a closed position, the notch is engaging the straight part.

According to an embodiment, the connection hole comprises a near end and a remote end, and the connection hook comprises a topside and an underside, and when the side bar is in an open position, the topside of the connection hook is engaging the remote end of the connection hole, and the underside of the connection hook is engaging the near end of the connection hole.

The connection hole is an oblong hole in the side bar. The connection hole comprises a near end and a remote end, the near end is the end closest to the notch, and the remote end is the end furthest from the notch. The connection hook comprises a topside and an underside. The topside is also the top end of the outside elastic part. The underside is the side facing the axial groove.

The side bar can be in a closed position, an open position, in intermediate positions between the open position and a closed position, and further the side bar can be in an extended position beyond the open position. The open position is the position the sidebar will be in, when a person is wearing the spectacles. In the open position the side bars will form an angle close to 90 degrees with the frame front. In an open position the topside of the connection hook is engaging the remote end of the connection hole and the underside of the connection hook is engaging the near end of the connection hole. In an open position the notch is engaging the slanting part of the inside elastic part.

By the underside of the connection hook engaging the near end and the topside of the connection hook engaging the remote end of the connection hole, stability is achieved, so the side bar is stable and is not loose, and there will be no wiggling, slackness or play when the side bars are in an open position.

According to an embodiment, the connection hole comprises a near end and a remote end, and the connection hook comprises an topside and an underside, and when the side bar is in an closed position, the topside of the connection hook is engaging the remote end of the connection hole, and the underside of the connection hook is engaging the near end of the connection hole.

When the side bar is in a closed position, the side bar is substantially parallel with the frame front. The side bar is typically in a closed position, when a person is not wearing the spectacles and have folded the sides bar to be substantially parallel with the frame front and put the spectacles on a table or in a box.

When a side bar is in a closed position, the topside of the connection hook is engaging the remote end of the connection hole, and the underside of the connection hook is engaging the near end of the connection hole.

By the underside of the connection hook engaging the near end and the topside engaging the remote end of the connection hole, stability is achieved, so the side bar is stable and is not loose and there will be no wiggling, slackness or play when the side bars are in a closed position.

According to an embodiment, the notch narrows towards the bottom of the notch in a conical shape.

The notch is formed in a conical shape so that when the inside elastic part is engaging the notch, the spring force is wedging the inside elastic part into the bottom of the notch, thereby the inside elastic part will be firmly maintained in a fixed and stable position and there will be no wiggling, slackness or play.

According to an embodiment, the connection hole is an oblong hole, which narrows towards the near end and towards the remote end of the connection hole.

The connection hole preferable is an oblong hole, with two ends, a near end and a remote end. The near end of the connection hole is the end of the connection hole nearest to the notch. The near end is formed in a conical shape, just like the notch, and when the outside elastic part is engaging the near end, the spring force is wedging the outside elastic part into the bottom of the conical shaped near end, thereby the outside elastic part will be firmly maintained in a fixed and stable position and there will be no wiggling, slackness or play.

With the outside elastic part engaging the remote end and wedging into the bottom of the conical shaped near end, and the inside elastic part wedging into the bottom of the conical shaped notch, the side par is in a stable open position without wiggling, slackness or play.

According to an embodiment, the inside elastic part comprises a straight part, and when the notch is engaging the straight part, the spring force is moving the side bar towards a closed position.

When moving the side bar from an open to a closed position, the notch is pushed down the slanting part of the inside elastic part, over the chin and into the straight part. The chin is the point, where the slanting part and the straight part of the inside elastic part meets. When the notch has been moved into a position, where it is engaging the straight part, and the outside elastic part is engaging the near end of the connection hole, the intermediate part of the side section is in an oblique position between the outside elastic part and the inside elastic part, and the spring force will make the notch slide further down the straight part, until the side bar reaches the closed position, and thereby move the side bar to a closed position.

According to an embodiment, the inside elastic part comprises a slanting part, and when the notch is engaging the slanting part, the spring force is moving the side bar towards an open position.

When the notch is engaging the slanting part of the inside elastic part, and the outside elastic part is engaging the connection hole, the spring force will push the notch to slide down the slanting part, until the side bar reaches the open position, and thereby move the side bar to the open position. When the side bar reaches the open position, the topside of the connection hook is engaging the remote end of the connection hole, and the underside of the connection hook is engaging the near end of the connection hole. When the topside of the connection hook is engaging the remote end of the connection hole, the side bar will move no further and the notch will keep in contact with the slanting part.

Between the slanting part and the straight part of the inside elastic part, where the slanting part and the straight part meets, there is a chin. When the notch is engaging the inside elastic part above the chin, on the slanting part, the spring force will push the side bar towards an open position. When the notch is engaging the inside elastic part below the chin, on the straight part, the spring force will push the side bar towards a closed position.

According to an embodiment, the inside elastic part comprises a locking hook, and when the side bar is in an extended position, the locking hook is engaging the side section preventing the inside elastic part from sliding away from the notch.

The side bar is in an extended position, when the side bar is opened too much, it has been pushed beyond the open position by force. The notch is no longer engaging the slanting part, instead the notch is now engaging a constriction placed between the slanting part and the locking hook. The locking hook is engaging the side section, and/or the rim of the notch. The locking hook prevents the inside elastic part from moving further and disengage the side section, which would result in that the side bar would be released from the frame front and the spectacles would fall apart.

According to an embodiment, the side section comprises a slit between the connection hole and the notch.

When moving the side bar from an open to a closed position or visa versa, there is a point, where the notch, which is located at the end of the side bar, engages the chin between the straight part and the slanting part of the inside elastic part. In that position, when the chin of a side bar is engaging the surface of the notch, there may be no spring effect strong enough to make the side bar move towards an open or a closed position. To reduce the area, where there is no movement from the spring effect, the thickness of the notch is reduced by cutting a slit in the intermediate part between the connection hole and the notch. Hereby, the thickness of the notch is reduced in the area, where the chin engages the notch. Preferable the slit is placed on the outer side of the side section. Alternatively the slit may be placed on the inner side of the side section.

According to an embodiment, the side section comprises a slope covering a section of an intermediate part, between the connection hole and the notch, which is closest to the notch, the slope is sloping towards the notch.

Another way to reduce the thickness of the notch is to make a slope, which is sloping towards the notch, in the area, the intermediate part, of the side section between the connection hole and the notch. The slope may only cover a part of the area between the connection hole and the notch, the slope is then located in the part of the intermediate part closest to the notch sloping towards the notch. Also this embodiment reduces the thickness of the notch, where the inside elastic part engages the notch. Preferable the slope is placed on the outer side of the side section. Alternatively the slope may be placed on the inner side of the side section.

The two solutions may be combined to that a slit is cut in the intermediate part between the connection hole and the notch, and a slope is cut in the area of the slit closest to the notch.

Further, yet another alternative embodiment is to make the slit and the slope combine to form a curve that is gradually increasing the slope towards the notch.

In a second aspect, the invention relates to a method for applying a hinge mechanism for spectacles, the spectacles comprises a frame front and a side bar, wherein the method comprises:
- providing a side section in the frame front, the side section comprises a connection hole and a notch,
- providing an axial groove in the upper end of the side bar, the axial groove is dividing the upper end of the side bar in an outside elastic part and an inside elastic part, the outside elastic part and the inside elastic part both generates a spring force working towards the axial groove,
- engaging the outside elastic part of the side bar with the connection hole of the side section, and
- engaging the inside elastic part of the side bar with the notch of the side section,
- pressuring, by the spring force, the outside elastic part against the side of the connection hole, and
- pressuring, by the spring force, the inside elastic part against the notch,
- preventing the outside elastic part from sliding out of the connection hole by the outside elastic part comprising a connection hook engaging the side section.

According to an embodiment, the connection hole comprises a near end and a remote end, and wherein the method further comprises, when the side bar is in an open position
- engaging a topside of the of the connection hook with the remote end of the connection hole,
- engaging an underside of the connection hook with the near end of the connection hole,
- engaging the slanting part of the inside elastic part with the notch.

When in an open position the topside of the connection hook is engaging the remote end of the connection hole, and the underside of the connection hook is engaging the near end of the connection hole. Further, the notch is engaging the slanting part of the inside elastic part. When the notch is engaging the slanting part, the spring force would push to move the side bar further out, but by the topside of the connection hook engaging the remote end of the connection hole, further movement is prevented, the topside of the connection hook is pressed into the remote end.

According to an embodiment, the method further comprises
- positioning the side bar in a position, wherein the notch is in contact with a straight part of the inside elastic part,
- moving, by the spring force, the side bar to a closed position.

When the side bar is positioned so the notch is in contact with the straight part of the inside elastic part, the spring force will push and thereby move the side bar to the closed position.

According to an embodiment, the method further comprises,
- positioning the side bar in a position, wherein the notch is in contact with a slanting part of the inside elastic part,
- moving, by the spring force, the side bar to an open position.

When the side bar is positioned so the notch is in contact with the slanting part of the inside elastic part, the spring force will push and thereby move the side bar to the open position.

The first and second aspect of the present invention may each be combined with any of the other aspects. These and other aspects of the invention will be apparent from and elucidated with reference to the embodiments described hereinafter.

### BRIEF DESCRIPTION OF THE FIGURES

The hinge mechanism according to the invention will now be described in more detail with regard to the accompanying figures. The figures show one way of implementing the present invention and is not to be construed as being limiting to other possible embodiments falling within the scope of the attached claim set.
Fig. 1 illustrates a pair of spectacles according to the invention.
Fig. 2 illustrates the side section of the frame front and the upper end of the side bar in 3D view.
Fig. 3 illustrates the upper end of the side bar attached to the side section of the frame front in a 3D-view.
Fig. 4a and 4b illustrates the side section of the frame front and the upper part of the side bar in a side view and a 3D view respectively.
Fig. 5a and 5b illustrates the side section of the frame front and the upper part of the side bar attached in an open position in a side view and a 3D view respectively.
Fig. 6a and 6b illustrates the side section of the frame front and the upper part of the side bar attached in an intermediate position between the open position and the closed position in a side view and a 3D view respectively.
Fig. 7a and 7b illustrates the side section of the frame front and the upper part of the side bar attached in a closed position in a side view and a 3D view respectively.
Fig. 8 illustrates the side section with a slit in the intermediate part between the notch and the connection hole.
Fig. 9 illustrates the side section with a slit sloping towards the notch.
Fig. 10 illustrates the side section with a slit in the intermediate part and a flat notch.
Fig. 11 illustrates the side section with a slit sloping towards the notch and a flat notch.

### DETAILED DESCRIPTION OF AN EMBODIMENT

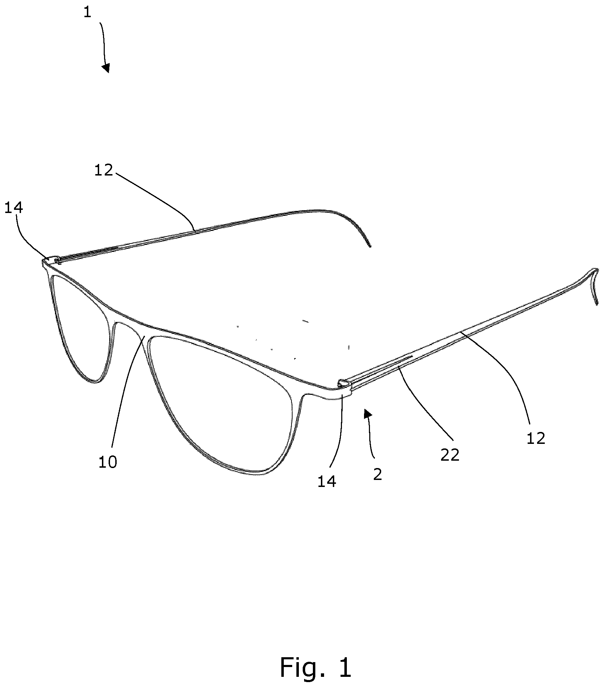

Fig. 1 illustrates a pair of spectacles according to the invention. The spectacles 1 comprises a frame front 10 and two side bars 12. The side bars 12 are attached to the frame front 10 by a hinge mechanism 2. The frame front 10 comprises side sections 14, one at each side of the frame front 10. The side bars 12 are attached to the side sections 14.

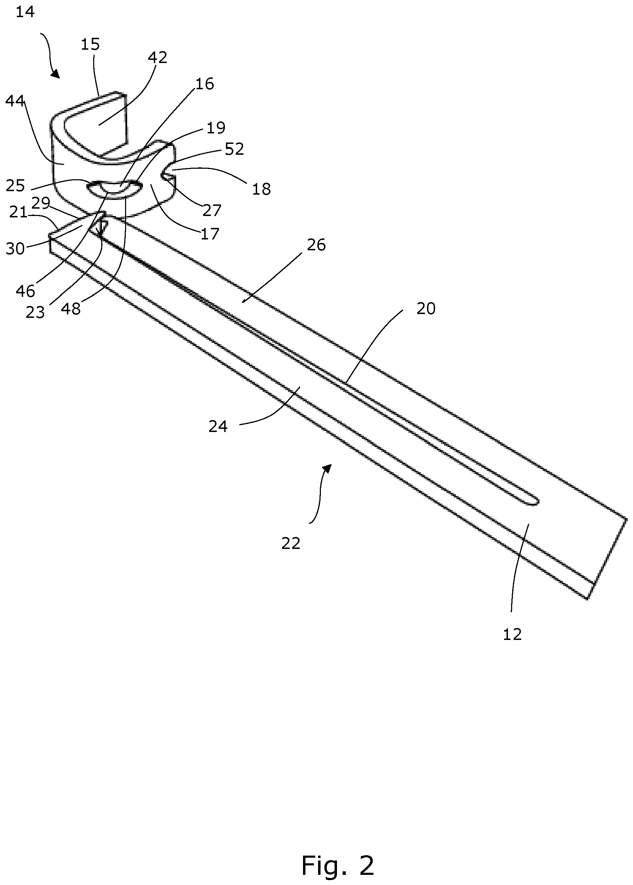

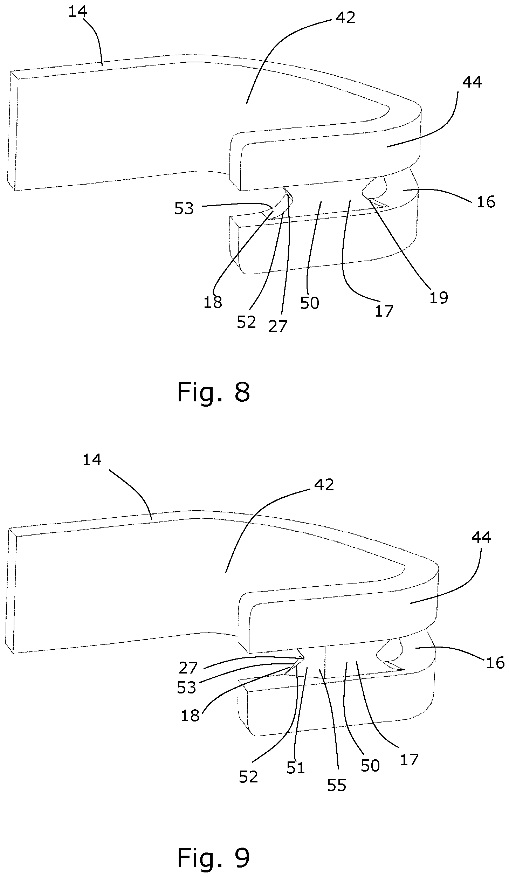

Fig. 2 illustrates a side section 14 of the frame front 10 and the upper end 22 of the side bar 12 in 3D view. The side section 14 is formed as a u-shaped bend, where the upper part 15 is integrally connected to the frame front 10. The side section 14 comprises a notch 18 and a connection hole 16. The connection hole is oblong and comprise a near end 19, which is the end closest to the notch 18, and a remote end 25, which is the end farthest away from the notch 18. Between the notch 18 and the connection hole 16 is an intermediate part 17. The side section 14 comprises an inner side 42, which is the inner side of the u-shaped bend, and an outer side 44, which is the outer side of the u-shaped bend. The connection hole 16 comprises an inside edge 46 at the inner side of the side section 14, and an outside edge 48 at the outer side of the side section 14. The notch 18 comprises an inside rim 53 (fig. 8) at the inner side 42 of the side section 14, and an outside rim 52 at the outer side 44 of the side section 14.

The upper end 22 of the side bar 12 comprises a longitudinal axial grove 20 cut into the side bar 12 from the top end 21 of the side bar 12. The axial groove divides the upper end 22 of the side bar 12 in an outside elastic part 24 and an inside elastic part 26. The outside elastic part and the inside elastic part functions as blade springs. When the outside elastic part 24 and the inside elastic part 26 are pushed away from each other, they generates a spring force pressuring the two elastic parts 24, 26 toward the axial groove 20 and toward each other. The outside elastic part 24 comprises a connection hook 30 at the top end 21 and the connection hook 30 comprises a topside 29, which is identically to the top end 21, and an underside 23.

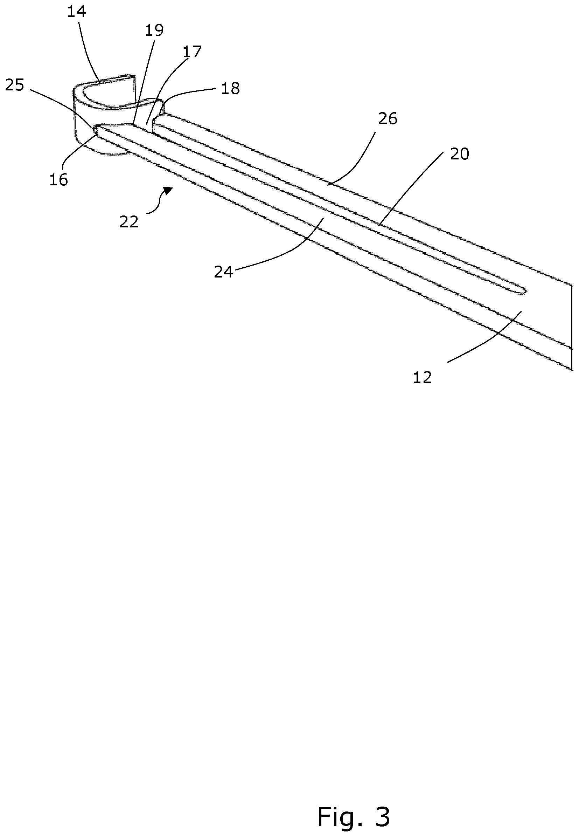

Fig. 3 illustrates the side bar 12 attached to the side section 14. The inside elastic part 26 is engaging the notch 18 and the outside elastic part 24 is going through the connection hole 16 and is engaging the near end 19 and the remote end 25 of the connection hole. The intermediate part 17 is now between the outside elastic part 24 and the inside elastic part 26 pushing the inside elastic part 26 and the outside elastic part 24 away from each other, therefore, a spring force between the outside elastic part and the inside elastic part towards the axial groove 20 is generated, making the inside elastic part and the outside elastic part pinching the intermediate part 17 between them.

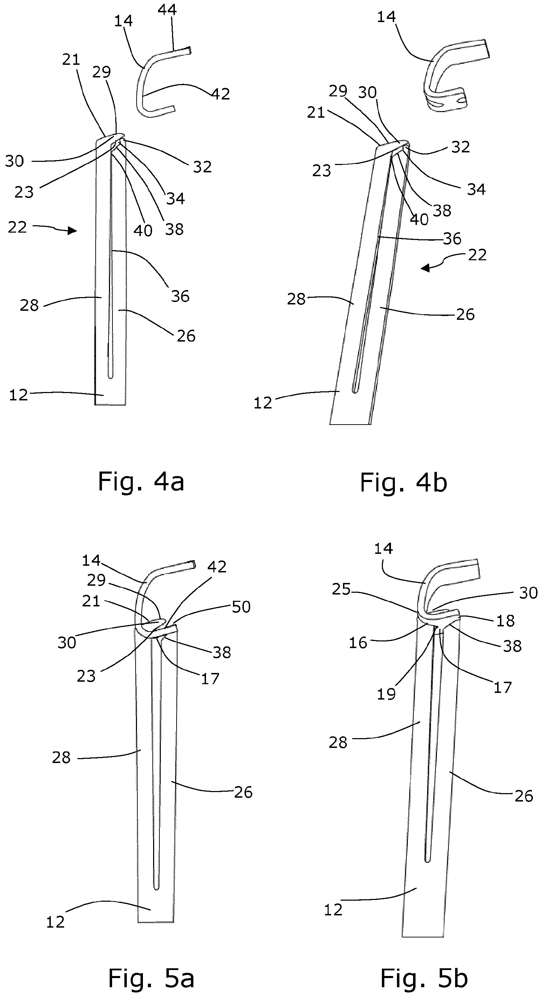

Fig. 4a and 4b illustrates the side section 14 of the frame front and the upper part 22 of the side bar in a side view and a 3D view respectively. The outside elastic part 28 comprises a connection hook 30 at the top end 21. The inside elastic part 26 comprises, described from the top end, a locking hook 32, a constriction 34, a slanting part 38, a chin 40 and a straight part 36.

Fig. 5, 6 and 7 illustrates the side section 14 and the upper part 22 of the side bar 12 in an open position, an intermediate position and a closed position respectively.

Fig. 5a shows the open position in a side view and fig. 5b shows the open position in a 3D view. The connection hook 30 is going through the connection hole 16 and the outside elastic part 28 is engaging the connection hole 16 and wedging into the near end 19 of the connection hole and is engaging the remote end 25 of the connection hole. The connection hook 30 is a part of the outside elastic part 28. It may be the connection hook 30, which is engaging the near end 19 and the remote end 25 of the connection hole with the topside 29 engaging the remote end 25 and the underside 23 engaging the near end 19. The inside elastic part 26 is engaging the notch 18 and is wedging into the bottom of the notch 18. In an open position it is the slanting part 38 of the inside elastic part, which is engaging the notch 18. The intermediate part 17 of the side section 14 is pinched between the inside elastic part 26 and the outside elastic part 28. The connection hook 30 is engaging the near end of the connection hole 16, the connection hook may only engage the inside edge of the connection hole. The side bar 12 is fixed in a closed position by the connection hook engaging both the near end and the remote end of the connection hole. The side bar 12 is thereby not allowed to move so far out that the notch 18 reaches the end of the inside elastic part. At the end of the inside elastic part is the locking hook 32 preventing that in case the side bar is extended beyond the open position that the side bar would fall off the side section and the spectacles fall apart.

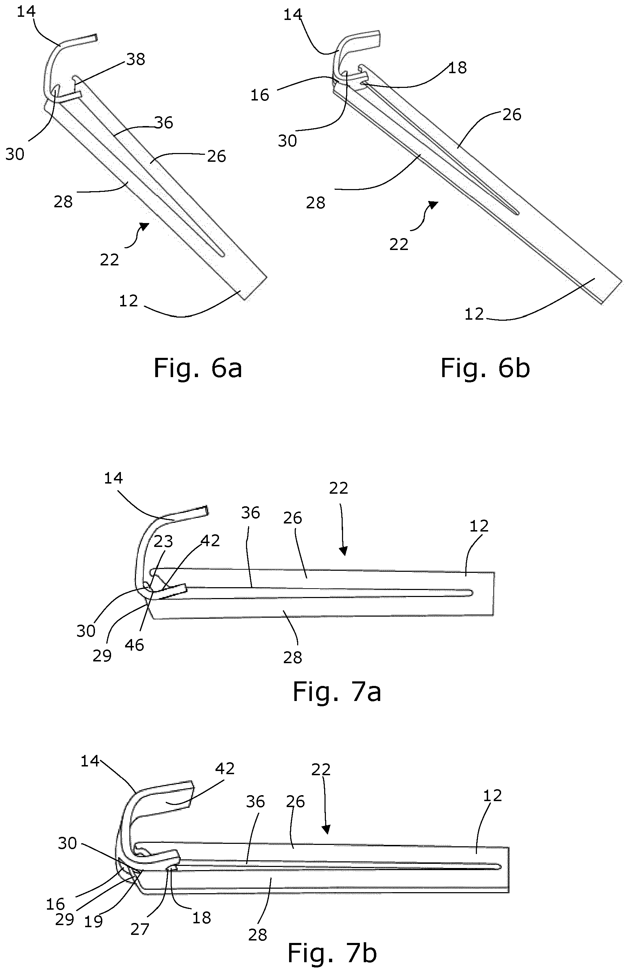

Fig. 6a and 6b shows, in a side view and a 3D view respectively, the side section 14 and the upper part 22 of the side bar 12 in an intermediate position between the open position and the closed position. Compared to the open position in fig. 5a and 5b, the side bar is now moved inward, the connection hook 30 is still in the connection hole 16, but the notch 18 has moved and is now in contact with the inside elastic part 26 close to the chin between the slanting part 38 and the straight part 36.

If the notch 18 is positioned in a position engaging the slanting part 38, the spring force generated by the outside elastic part 28 and the inside elastic part 26, which is working as blade springs, will push the side bar 12 back into an open position. The movement to an open position will stop when the top end of the outside elastic part hits the remote end 25 of the connection hole. If the notch is positioned in a position engaging the straight part 36 of the inside elastic part 26, the spring force will push the side bar 12 into a closed position. The movement will stop when the top end of the outside elastic part hits the inner side 42 of the side section 14 by hitting the inside edge 46 of the remote end 25 of the connection hole.

Fig. 7a and 7b shows, in a side view and a 3D view respectively, the upper part 22 of the side bar 12 in a closed position. Now the notch 18 is engaging the straight part 36 of the inside elastic part 26 and is wedging into the bottom 27 of the notch 18. The outside elastic part 28 is engaging the connection hole 16 and is wedging into the near end 19 of the connection hole. The connection hook 30 is still at least partly passing through the connection hole 16. The top end of the outside elastic part, which also is the topside 29 of the connection hook, is engaging the inner side 42 of the side section 14, possible by engaging the inside edge 46 of the remote end of connection hole 16, and also engaging the near end 19 keeping the side bar 12 in a closed position.

Fig. 8 shows the side section 14 with a slit 50 between the notch 18 and the connection hole 16. The thickness of the slit 50 is smaller than the general thickness of the side section 14. For instance the side section may have a general thickness of 0.6 mm, whereas the slit may have a thickness of 0.3 mm. The surface of the slit is preferable parallel to the surface of the side section 14.

When the notch 18, which is located at the end of the side section 14, is engaging the inside elastic part 26 above the chin 40, on the slanting part 38, the spring force will push the side bar 12 towards an open position. When the notch 18 is engaging the inside elastic part 26 below the chin 40, on the straight part 36, the spring force will push the side bar 12 towards a closed position.

However, when the chin 40 of the inside elastic part 26 is engaging the notch 18, at or near the bottom 27 of the notch, the side bar may stand still and not move neither to an open nor to a closed position. Therefore, it is preferable that the thickness of the notch is reduced, where the notch engages the inside elastic part 26. To achieve this in fig. 8 a slit 50 is cut in the intermediate part 17 between the notch 18 and the connection hole 16. The slit 50 is preferable cut in the outer side 44 of the side section 14, but it may alternatively be cut in the inner side 42 of the side section.

When the chin 40 passes the outside rim 52 between the notch 18 and the slit 50, then the notch engages the straight part 36, and the side bar 12 will move towards a closed position. When the chin passes the inside rim 53 between the notch and the inner side 42 of the side section 14, then the notch engages the slanting part and the side bar 12 will move towards an open position.

When the side section 14 is relatively thick, it is preferable to reduce the thickness of the notch 18 in the area, where the notch engages the inside elastic part 26. This may be achieved by cutting a slit 50 in the intermediate part 17 between the connection hole 16 and the notch 18 to reduce the thickness of the side section at the notch 18 and thereby reducing the thickness of the notch 18. Thereby, the area, where the movement of the side bar may be standing still, is reduced.

Fig. 9 shows the side section 14 with a slit 50 in the intermediate part 17 between the notch 18 and the connection hole 16, where the end of the slit 50, at the notch 18, has a section 55, which has a slope 51, sloping towards the notch 18.

The slope 51 has the advantage of further reducing the thickness of the notch 18 at the area, where the inside elastic part 26 engages the notch, and therefore reduces the area, where the movement of the sidebar may be standing still, when the notch 18 engages the chin 40. When the chin passes the outside rim 52 between the notch 18 and the slope 51 towards the slope, then the notch engages the straight part 36, and the side bar 12 will move towards a closed position.

The slope 51 and the slit in fig. 9 is on the outer side 44 of the side section 14, but may alternatively be made on the inner side 42.

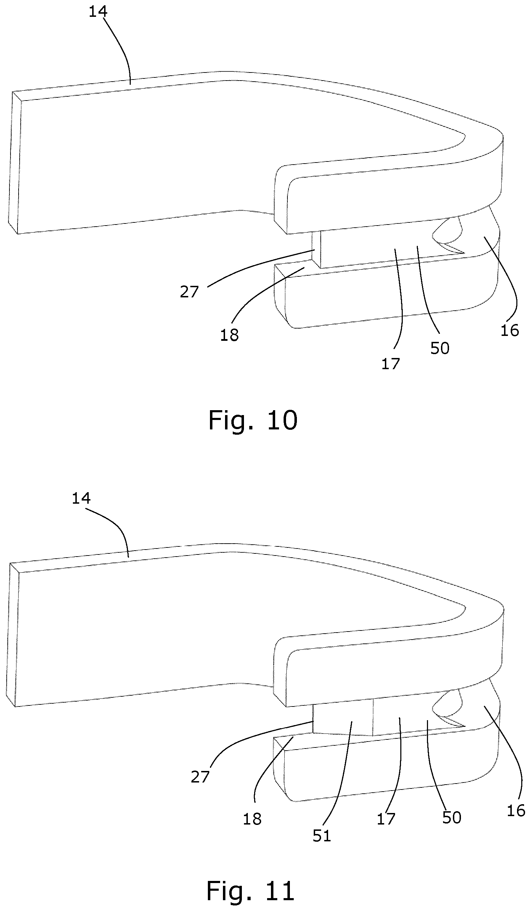

The slope 51 can be combined with a slit 50 as shown in fig. 9, but an embodiment without a slit 50, but with a slope 51 is also possible. Fig. 10 shows the side section 14 with a slit 50 in the intermediate part 17 between the notch 18 and the connection hole 16. Fig. 10 shows an alternative embodiment of the notch, where the notch 18 does not narrow towards the bottom 27 of the notch, instead the bottom of the notch is flat.

Fig. 11 shows the side section 14 with a slit 50 in the intermediate part 17 between the notch 18 and the connection hole 16. Fig. 11 shows the slope 51 at the end of the slit closest to the notch. Further, also in fig. 11 the notch 18 does not narrow towards the bottom 27 of the notch, instead the bottom is flat.

Not having the notch narrowing towards the bottom makes the manufacturing simpler, and the narrowing may not be needed, if the width of the inside elastic part of the side bars is almost the same as the width of the notch.

Also, the near end and the remote end of the connection hole may in an alternative embodiment be flat, even though this is now shown in any of the figures.

The slope and the slid in Fig. 8-11 are shown on the outer side 44 of the side section, but may alternatively be placed in the inner side 42. In a further embodiment there may be a slits and/or slopes on both sides of the side section.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A hinge mechanism for spectacles comprising a frame front and two side bars, the frame front (10) comprises two side sections (14) for attaching the side bars (12) to the frame front, each side section being in the form of a bent metal plate and each side section comprising a connection hole (16) and a notch (18), and each side bar (12) comprises an axial groove (20), the axial groove divides an upper end (22) of the side bar in an outside elastic part (24) and an inside elastic part (26),
- the outside elastic part and the inside elastic part both generate a spring force working towards the axial groove (20),
- the outside elastic part (24) of the side bar is engaging the connection hole (16) of the side section (14), and
- the inside elastic part (26) of the side bar is engaging the notch (18) of the side section (14),
- the spring force of the outside elastic part (24) is pressuring the outside elastic part against the side of the connection hole (16), and
- the spring force of the inside elastic part (26) is pressuring the inside elastic part against the notch (18),
- the outside elastic part (24) comprises a connection hook (30), and the connection hook (30) is engaging the connection hole in the side section, preventing the outside elastic part (24) from sliding out of the connection hole (16).

2. The hinge mechanism for spectacles according to claim 1, wherein the connection hole (16) comprises a near end (19) and a remote end (25), and the connection hook (30) comprises an topside (29) and an underside (23), and when the side bar (12) is in an open position, the topside (29) of the connection hook is engaging the remote end (25) of the connection hole, and the underside (23) of the connection hook is engaging the near end (19) of the connection hole.

3. The hinge mechanism for spectacles according to claims 1 or 2, wherein the connection hole (16) comprises a near end (19) and a remote end (25), and the connection hook (30) comprises an topside (29) and an underside (23), and when the side bar (12) is in an closed position, the topside (29) of the connection hook is engaging the remote end (25) of the connection hole, and the underside (23) of the connection hook is engaging the near end (19) of the connection hole.

4. The hinge mechanism for spectacles according to claims 1-3, wherein the notch (18) narrows towards a bottom (27) of the notch in a conical shape.

5. The hinge mechanism for spectacles according to claims 1-4, wherein the connection hole (16) is an oblong hole, which narrows towards the near end (19) and towards the remote end (25) of the connection hole.

6. The hinge mechanism for spectacles according to claims 1-5, wherein the inside elastic part (26) comprises a straight part (36), and when the notch
(18) is engaging the straight part, the spring force is moving the side bar (12) towards a closed position.

7. The hinge mechanism for spectacles according to claims 1-6, wherein the inside elastic part (26) comprises a slanting part (38), and when the notch
(18) is engaging the slanting part (38), the spring force is moving the side bar (12) towards an open position.

8. The hinge mechanism for spectacles according to claim 1-7, wherein the inside elastic part (26) comprises a locking hook (32), and when the side bar (12) is in an extended position, the locking hook (32) is engaging the side section (14) preventing the inside elastic part (26) from sliding away from the notch (18).

9. The hinge mechanism for spectacles according to claims 1-8, wherein the side section (14) comprises a slit (50) between the connection hole (16) and the notch (18).

10. The hinge mechanism for spectacles according to claims 1-9, wherein the the side section (14) comprises a slope (51) covering a section (55) of an intermediate part (17), between the connection hole (16) and the notch (18), which is closest to the notch, the slope (51) is sloping towards the notch (18).

11. A method for applying a hinge mechanism for spectacles, the spectacles comprises a frame front and a side bar, wherein the method comprises:
- providing a side section (14) in the frame front (10), the side section being in the form of a bent metal plate and comprising a connection hole (16) and a notch (18),
- providing an axial groove (20) in the upper end (22) of the side bar (12), the axial groove is dividing the upper end of the side bar in an outside elastic part (24) and an inside elastic part (26), the outside elastic part and the inside elastic part both generates a spring force working towards the axial groove (20),
- engaging the outside elastic part (24) of the side bar with the connection hole (16) of the side section (14), and
- engaging the inside elastic part (26) of the side bar with the notch (18) of the side section (14),
- pressuring, by the spring force, the outside elastic part (24) against the side of the connection hole (16), and
- pressuring, by the spring force, the inside elastic part against the notch (18),
- preventing the outside elastic part (24) from sliding out of the connection hole (16) by the outside elastic part comprising a connection hook (30) engaging the connection hole in the side section.

12. The method for applying the hinge mechanism for spectacles according to claim 11, wherein the connection hole (16) comprises a near end (19) and a remote end (25), and wherein the method further comprises, when the side bar (12) is in an open position
- engaging a topside (29) of the of the connection hook (30) with the remote end (25) of the connection hole,
- engaging an underside (23) of the connection hook with the near end (19) of the connection hole,
- engaging the slanting part (38) of the inside elastic part (26) with the notch (18).

13. The method for applying the hinge mechanism for spectacles according to claims 11 or 12, wherein the method further comprises,
- positioning the side bar (12) in a position, wherein the notch (18) is in contact with a straight part (36) of the inside elastic part (26),
- moving, by the spring force, the side bar to a closed position.

14. The method for applying the hinge mechanism for spectacles according to claims 11-13, wherein the method further comprises,
- positioning the side bar (12) in a position, wherein the notch (18) is in contact with a slanting part (38) of the inside elastic part (26),
- moving, by the spring force, the side bar to an open position.

## Patentansprüche

1. Brillenscharniermechanismus, umfassend eine Rahmenfront und zwei Bügel, wobei die Rahmenfront (10) zwei Seitenabschnitte (14) zum Anbringen der Bügel (12) an der Rahmenfront umfasst, wobei jeder Seitenabschnitt die Form einer gebogenen Metallplatte aufweist und jeder Seitenabschnitt ein Verbindungsloch (16) und eine Einkerbung (18) umfasst, und jeder Bügel (12) eine axiale Nut (20) umfasst, wobei die axiale Einkerbung ein oberes Ende (22) des Bügels in einen äußeren elastischen Teil (24) und einen inneren elastischen Teil (26) unterteilt,
- sowohl der äußere elastische Teil als auch der innere elastische Teil eine Federkraft erzeugen, die in Richtung der axialen Nut (20) wirkt,
- der äußere elastische Teil (24) des Bügels das Verbindungsloch (16) des Seitenabschnitts (14) in Eingriff nimmt und
- der innere elastische Teil (26) des Bügels die Einkerbung (18) des Seitenabschnitts (14) in Eingriff nimmt,
- die Federkraft des äußeren elastischen Teils (24) den äußeren elastischen Teil gegen die Seite des Verbindungslochs (16) drückt und
- die Federkraft des inneren elastischen Teils (26) den inneren elastischen Teil gegen die Einkerbung (18) drückt und
- der äußere elastische Teil (24) einen Verbindungshaken (30) umfasst und der Verbindungshaken (30) das Verbindungsloch im Seitenabschnitt in Eingriff nimmt, wodurch verhindert wird, dass der äußere elastische Teil (24) aus dem Verbindungsloch (16) herausgleitet.

2. Brillenscharniermechanismus nach Anspruch 1, wobei das Verbindungsloch (16) ein nahes Ende (19) und ein entferntes Ende (25) umfasst und der Verbindungshaken (30) eine Oberseite (29) und eine Unterseite (23) umfasst, und wenn sich Bügel (12) in einer offenen Position befindet, nimmt die Oberseite (29) des Verbindungshakens das entfernte Ende (25) des Verbindungslochs in Eingriff und die Unterseite (23) des Verbindungshakens nimmt das nahe Ende (19) des Verbindungslochs in Eingriff.

3. Brillenscharniermechanismus nach Anspruch 1 oder 2, wobei das Verbindungsloch (16) ein nahes Ende (19) und ein entferntes Ende (25) umfasst und der Verbindungshaken (30) eine Oberseite (29) und eine Unterseite (23) umfasst, und wenn sich Bügel (12) in einer geschlossenen Position befindet, nimmt die Oberseite (29) des Verbindungshakens das entfernte Ende (25) des Verbindungslochs in Eingriff und die Unterseite (23) des Verbindungshakens nimmt das nahe Ende (19) des Verbindungslochs in Eingriff.

4. Brillenscharniermechanismus nach den Ansprüchen 1-3, wobei die Einkerbung (18) sich zur Unterseite (27) der Einkerbung hin konisch verengt.

5. Brillenscharniermechanismus nach den Ansprüchen 1-4, wobei das Verbindungsloch (16) ein Langloch ist, das sich zum nahen Ende (19) und zum entfernten Ende (25) des Verbindungslochs hin verengt.

6. Brillenscharniermechanismus nach den Ansprüchen 1-5, wobei der innere elastische Teil (26) einen geraden Teil (36) umfasst und, wenn die Einkerbung (18) den geraden Teil in Eingriff nimmt, die Federkraft den Bügel (12) in Richtung einer geschlossenen Position bewegt.

7. Brillenscharniermechanismus nach den Ansprüchen 1-6, wobei der innere elastische Teil (26) ein schräges Teil (38) umfasst und, wenn die Einkerbung (18) das schräge Teil (38) in Eingriff nimmt, die Federkraft den Bügel (12) in Richtung einer offenen Position bewegt.

8. Brillenscharniermechanismus nach den Ansprüchen 1-7, wobei der innere elastische Teil (26) einen Verriegelungshaken (32) umfasst und, wenn sich der Bügel (12) in einer ausgezogenen Position befindet, der Verriegelungshaken (32) den Seitenabschnitt (14) in Eingriff nimmt, wodurch verhindert wird, dass der innere elastische Teil (26) von der Einkerbung (18) weggleitet.

9. Brillenscharniermechanismus nach den Ansprüchen 1-8, wobei der Seitenabschnitt (14) einen Schlitz (50) zwischen dem Verbindungsloch (16) und der Einkerbung (18) umfasst.

10. Brillenscharniermechanismus nach den Ansprüchen 1-9, wobei der Seitenabschnitt (14) eine Neigung (51) umfasst, die einen Abschnitt (55) eines Zwischenteils (17) zwischen dem Verbindungsloch (16) und der Einkerbung (18) abdeckt, der der Einkerbung am nächsten liegt, wobei die Neigung (51) zur Einkerbung (18) hin geneigt ist.

11. Verfahren zum Anbringen eines Brillenscharniermechanismus, wobei die Brille eine Rahmenfront und einen Bügel umfasst, wobei das Verfahren umfasst:
- Bereitstellen eines Seitenabschnitts (14) in der Rahmenfront (10), wobei der Seitenabschnitt die Form einer gebogenen Metallplatte aufweist und ein Verbindungsloch (16) und eine Einkerbung (18) umfasst,
- Bereitstellen einer axialen Nut (20) im oberen Ende (22) des Bügels (12), wobei die axiale Einkerbung das obere Ende des Bügels in einen äußeren elastischen Teil (24) und einen inneren elastischen Teil (26) unterteilt, wobei sowohl der äußere elastische Teil als auch der innere elastische Teil eine Federkraft erzeugen, die in Richtung der axialen Nut (20) wirkt,
- In-Eingriff-Nehmen des äußeren elastischen Teils (24) des Bügels mit dem Verbindungsloch (16) des Seitenabschnitts (14) und
- In-Eingriff-Nehmen des inneren elastischen Teils (26) des Bügels mit der Einkerbung (18) des Seitenabschnitts (14),
- Drücken des äußeren elastischen Teils (24) gegen die Seite des Verbindungslochs (16) durch die Federkraft und
- Drücken des inneren elastischen Teils gegen die Einkerbung (18) durch die Federkraft,
- Verhindern, dass der äußere elastische Teil (24) aus dem Verbindungsloch (16) herausgleitet, indem der äußere elastische Teil einen Verbindungshaken (30) umfasst, der das Verbindungsloch im Seitenabschnitt in Eingriff nimmt.

12. Verfahren zum Anbringen des Brillenscharniermechanismus nach Anspruch 11, wobei das Verbindungsloch (16) ein nahes Ende (19) und ein entferntes Ende (25) umfasst, und wobei das Verfahren ferner umfasst, wenn sich der Bügel (12) in einer offenen Position befindet,
- In-Eingriff-Nehmen einer Oberseite (29) des Verbindungshakens (30) mit dem entfernten Ende (25) des Verbindungslochs,
- In-Eingriff-Nehmen einer Unterseite (23) des Verbindungshakens mit dem nahen Ende (19) des Verbindungslochs,
- In-Eingriff-Nehmen des schrägen Teils (38) des inneren elastischen Teils (26) mit der Einkerbung (18).

13. Verfahren zum Anbringen des Brillenscharniermechanismus nach Anspruch 11 oder 12, wobei das Verfahren ferner umfasst:
- Positionieren des Bügels (12) in einer Position, in der die Einkerbung (18) mit einem geraden Teil (36) des inneren elastischen Teils (26) in Kontakt steht,
- Bewegen des Bügels durch die Federkraft in eine geschlossene Position.

14. Verfahren zum Anbringen des Brillenscharniermechanismus nach den Ansprüchen 11-13, wobei das Verfahren ferner umfasst:
- Positionieren des Bügels (12) in einer Position, in der die Einkerbung (18) mit einem schrägen Teil (38) des inneren elastischen Teils (26) in Kontakt steht,
- Bewegen des Bügels durch die Federkraft in eine offene Position.

## Revendications

1. Mécanisme de charnière pour lunettes comprenant une face avant de monture et deux branches latérales, la face avant de monture (10) comprend deux sections latérales (14) pour attacher les branches latérales (12) à la face avant de monture, chaque section latérale se présentant sous la forme d'une plaque métallique courbée et chaque section latérale comprenant un trou de raccordement (16) et une encoche (18), et chaque branche latérale (12) comprend une rainure axiale (20), la rainure axiale divise une extrémité supérieure (22) de la branche latérale en une partie élastique extérieure (24) et une partie élastique intérieure (26),
- la partie élastique extérieure et la partie élastique intérieure génèrent toutes deux une force de ressort agissant vers la rainure axiale (20),
- la partie élastique extérieure (24) de la branche latérale s'engage dans le trou de raccordement (16) de la section latérale (14), et
- la partie élastique intérieure (26) de la branche latérale s'engage dans l'encoche (18) de la section latérale (14),
- la force de ressort de la partie élastique extérieure (24) exerce une pression sur la partie élastique extérieure contre le côté du trou de raccordement (16), et
- la force de ressort de la partie élastique intérieure (26) exerce une pression sur la partie élastique intérieure contre l'encoche (18),
- la partie élastique extérieure (24) comprend un crochet de raccordement (30), et le crochet raccordement (30) s'engage dans le trou de raccordement de la section latérale, empêchant la partie élastique extérieure (24) de glisser hors du trou de raccordement (16).

2. Mécanisme de charnière pour lunettes selon la revendication 1, dans lequel le trou de raccordement (16) comprend une extrémité proche (19) et une extrémité éloignée (25), et le crochet de raccordement (30) comprend un côté supérieur (29) et un côté inférieur (23), et lorsque la branche latérale (12) est en position ouverte, le côté supérieur (29) du crochet de raccordement s'engage dans l'extrémité éloignée (25) du trou de raccordement, et le côté inférieur (23) du crochet de raccordement s'engage dans l'extrémité proche (19) du trou de raccordement.

3. Mécanisme de charnière pour lunettes selon les revendications 1 ou 2, dans lequel le trou de raccordement (16) comprend une extrémité proche (19) et une extrémité éloignée (25), et le crochet de raccordement (30) comprend un côté supérieur (29) et un côté inférieur (23), et lorsque la branche latérale (12) est en position fermée, le côté supérieur (29) du crochet de raccordement s'engage dans l'extrémité éloignée (25) du trou de raccordement, et le côté inférieur (23) du crochet de raccordement s'engage dans l'extrémité proche (19) du trou de raccordement.

4. Mécanisme de charnière pour lunettes selon les revendications 1-3, dans lequel l'encoche (18) se rétrécit vers un fond (27) de l'encoche en forme conique.

5. Mécanisme de charnière pour lunettes selon les revendications 1-4, dans lequel le trou de raccordement (16) est un trou oblong, qui se rétrécit vers l'extrémité proche (19) et vers l'extrémité éloignée (25) du trou de raccordement.

6. Mécanisme de charnière pour lunettes selon les revendications 1-5, dans lequel la partie élastique intérieure (26) comprend une partie droite (36), et lorsque l'encoche (18) s'engage dans la partie droite, la force de ressort déplace la branche latérale (12) vers une position fermée.

7. Mécanisme de charnière pour lunettes selon les revendications 1-6, dans lequel la partie élastique intérieure (26) comprend une partie oblique (38), et lorsque l'encoche (18) s'engage dans la partie oblique (38), la force de ressort déplace la branche latérale (12) vers une position ouverte.

8. Mécanisme de charnière pour lunettes selon la revendication 1-7, dans lequel la partie élastique intérieure (26) comprend un crochet de verrouillage (32), et lorsque la branche latérale (12) est en position déployée, le crochet de verrouillage (32) s'engage dans la section latérale (14) empêchant la partie élastique intérieure (26) de glisser hors de l'encoche (18).

9. Mécanisme de charnière pour lunettes selon les revendications 1-8, dans lequel la section latérale (14) comprend une fente (50) entre le trou de raccordement (16) et l'encoche (18).

10. Mécanisme de charnière pour lunettes selon les revendications 1-9, dans lequel la section latérale (14) comprend une inclinaison (51) couvrant une section (55) d'une partie intermédiaire (17), entre le trou de raccordement (16) et l'encoche (18), qui est la plus proche de l'encoche, l'inclinaison (51) étant inclinée vers l'encoche (18).

11. Procédé pour mettre en application un mécanisme de charnière pour lunettes, dans lequel les lunettes comprennent une face avant de monture et une branche latérale, le procédé comprenant :
- la mise à disposition d'une section latérale (14) dans la face avant de monture (10), la section latérale se présentant sous la forme d'une plaque métallique courbée et comprenant un trou de raccordement (16) et une encoche (18),
- la mise à disposition d'une rainure axiale (20) dans l'extrémité supérieure (22) de la branche latérale (12), la rainure axiale divise l'extrémité supérieure de la branche latérale en une partie élastique extérieure (24) et une partie élastique intérieure (26), la partie élastique extérieure et la partie élastique intérieure génèrent toutes deux une force de ressort agissant vers la rainure axiale (20),
- l'engagement de la partie élastique extérieure (24) de la branche latérale dans le trou de raccordement (16) de la section latérale (14), et
- l'engagement de la partie élastique intérieure (24) de la branche latérale dans l'encoche (18) de la section latérale (14),
- l'exercice d'une pression, par la force de ressort, sur la partie élastique extérieure (26) contre le côté du trou de raccordement (16), et
- l'exercice d'une pression, par la force de ressort, sur la partie élastique intérieure contre l'encoche (18),
- la prévention du glissement de la partie élastique extérieure (24) hors du trou de raccordement (16) grâce à la partie élastique extérieure comprenant un crochet de raccordement (30) s'engageant dans le trou de raccordement dans la section latérale.

12. Procédé pour mettre en application le mécanisme de charnière pour lunettes selon la revendication 11, dans lequel le trou de raccordement (16) comprend une extrémité proche (19) et une extrémité éloignée (25), et dans lequel le procédé comprend en outre, lorsque la branche latérale (12) est en position ouverte
- l'engagement d'un côté supérieur (29) du crochet de raccordement (30) avec l'extrémité éloignée (25) du trou de raccordement,
- l'engagement d'un côté inférieur (23) du crochet de raccordement avec l'extrémité proche (19) du trou de raccordement,
- l'engagement de la partie oblique (38) de la partie élastique intérieure (26) avec l'encoche (18).

13. Procédé pour mettre en application le mécanisme de charnière pour lunettes selon les revendications 11 ou 12, dans lequel le procédé comprend en outre,
- le positionnement de la branche latérale (12) dans une position, dans laquelle l'encoche (18) est en contact avec une partie droite (36) de la partie élastique intérieure (26),
- le déplacement, par la force de ressort, de la branche latérale vers une position fermée.

14. Procédé pour mettre en application le mécanisme de charnière pour lunettes selon les revendications 11-13, dans lequel le procédé comprend en outre,
- le positionnement de la branche latérale (12) dans une position, dans laquelle l'encoche (18) est en contact avec une partie oblique (38) de la partie élastique intérieure (26),
- le déplacement, par la force de ressort, de la branche latérale vers une position ouverte.
